# EUROPÄISCHE PATENTSCHRIFT

(11) **EP 0 690 103 B1**
(45) Veröffentlichungstag und Bekanntmachung des Hinweises auf die Patenterteilung: **21.10.1998**
(21) Anmeldenummer: 95810393.9
(22) Anmeldetag: 13.06.1995
(51) Int. Cl.: C09B 43/16, C09B 56/04, C09B 62/08, D06P 3/82, D06P 3/60

(54) **Azofarbstoffe, Verfahren zu deren Herstellung und deren Verwendung**
Azo dyes, process for their preparation and the use thereof
Colorants azoiques, procédé pour leur préparation et leur utilisation

(30) Priorität: 20.06.1994 CH 1950/94
(43) Veröffentlichungstag der Anmeldung: 03.01.1996
(73) Patentinhaber: Ciba Specialty Chemicals Holding Inc., 4057 Basel (CH)
(72) Erfinder: Lauk, Urs, Dr., CH-8047 Zürich (CH)

(56) Entgegenhaltungen:
- EP-A- 0 465 420
- EP-A- 0 548 014
- DE-C- 853 324

## Beschreibung

Die vorliegende Erfindung betrifft neue Azofarbstoffe, Verfahren zu deren Herstellung sowie deren Verwendung zum Färben und Bedrucken von Fasermaterialien, insbesondere von textilen Fasermaterialien.

Die der vorliegenden Erfindung zugrunde liegende Aufgabe war es, Farbstoffe zu finden, welche zum Färben von stickstoffhaltigen und hydroxygruppenhaltigen Fasermaterialien, insbesondere von cellulosischen Fasermaterialien, geeignet sind, gute Echtheitseigenschaften aufweisen und hochtemperaturstabil sind.

Es wurde nun gefunden, dass die nachstehenden Azofarbstoffe der Formel (1) diesen Anforderungen genügen.

Gegenstand der vorliegenden Erfindung sind somit Azofarbstoffe der Formel 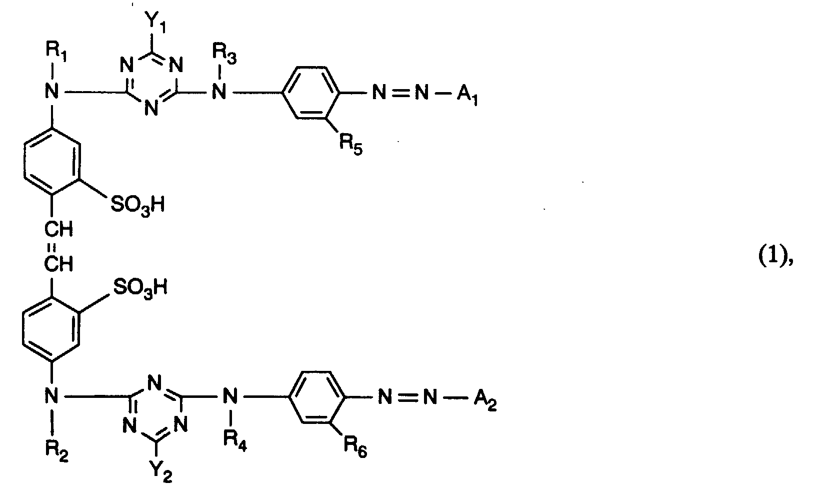 worin
R₁, R₂, R₃ und R₄ unabhängig voneinander Wasserstoff oder gegebenenfalls substituiertes C₁-C₄-Alkyl sind,
R₅ und R₆ C₂-C₄-Alkanoylalnino,
Y₁ und Y₂ Morpholino und
A₁ und A₂ durch Sulfo substituiertes Phenyl bedeuten.

In der DE-C-853,324 werden Farbstoffe offenbart, welche sich von den Farbstoffen der vorliegenden Erfindung einerseits hinsichtlich der Substituenten Y₁ und Y₂ am Triazinring und andererseits hinsichtlich der terminalen Azokomponenten A₁ und A₂ unterscheiden.

In der EP-A-0,465,420 werden Farbstoffe offenbart, welche sich von den Farbstoffen der vorliegenden Erfindung hinsichtlich eines weiteren Substituenten an der Phenylenkomponente der Monoazochromophoren unterscheiden.

Als C₁-C₄-Alkyl kommen für R₁, R₂, R₃ und R₄ z.B. Methyl, Äthyl, Propyl, Isopropyl, Butyl, sek.-Butyl, tert.-Butyl oder Isobutyl, insbesondere Methyl oder Aethyl, vorzugsweise Methyl, in Betracht. Als mögliche Substituenten der Reste R₁, R₂, R₃ und R₄ in der Bedeutung als C₁-C₄-Alkyl seien z.B. Hydroxy, C₁-C₄-Alkoxy, Halogen oder Sulfato genannt.

Die Bedeutung Sulfo umfasst generell die freie Säureform (-SO₃H) als auch die Salzform, wobei insbesondere Alkalimetallsalze (Li, Na, K) oder Ammoniumsalze in Frage kommen.

Als C₂-C₄-Alkanoylamino kommen für R₅ und R₆ z.B. Acetylamino oder Propionylamino in Betracht.

R₁, R₂, R₃ und R₄ sind bevorzugt Wasserstoff oder C₁-C₄-Alkyl, insbesondere Wasserstoff.

Bevorzugt sind R₅ und R₆ Acetylamino.

Die Bedeutungen der Reste A₁ und A₂ sind bevorzugt identisch.

Gegenstand der vorliegenden Erfindung ist ferner ein Verfahren zur Herstellung der Azofarbstoffe der Formel (1), welches dadurch gekennzeichnet ist, dass man
a) unabhängig voneinander eine Verbindung der Formel 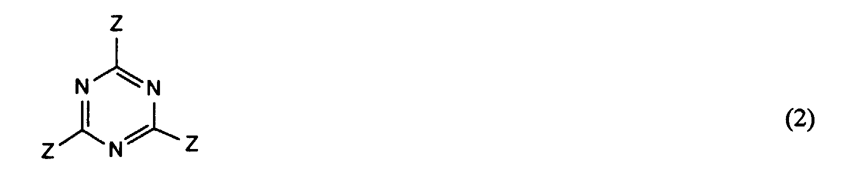 mit einer Verbindung der Formel 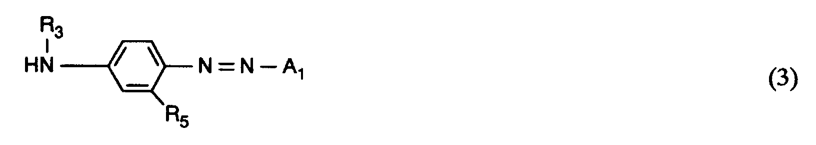 zur Verbindung der Formel 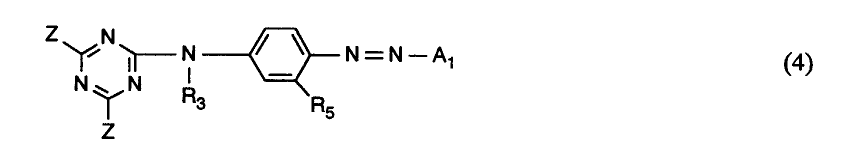 und eine weitere Verbindung der Formel (2) mit einer Verbindung der Formel 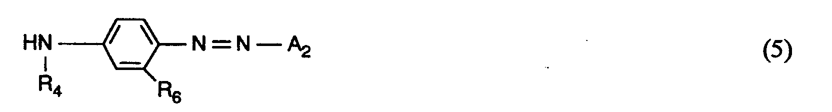 zur Verbindung der Formel 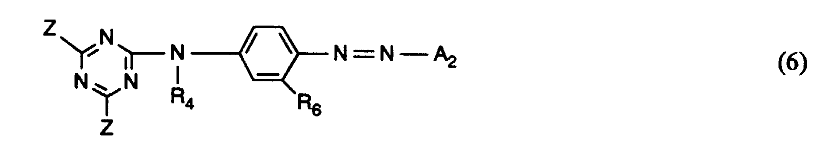 umsetzt,
b) eine Verbindung der Formel 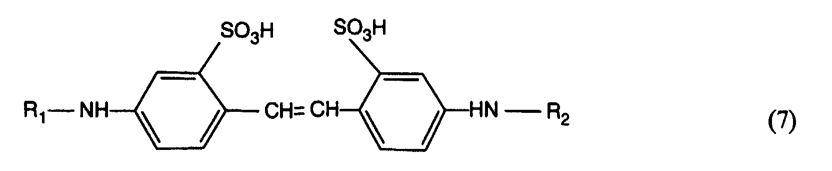 nacheinander in beliebiger Reihenfolge mit den gemäss a) erhältlichen Verbindungen der Formel (4) und (6) umsetzt und
c) die gemäss b) erhältliche Verbindung der Formel 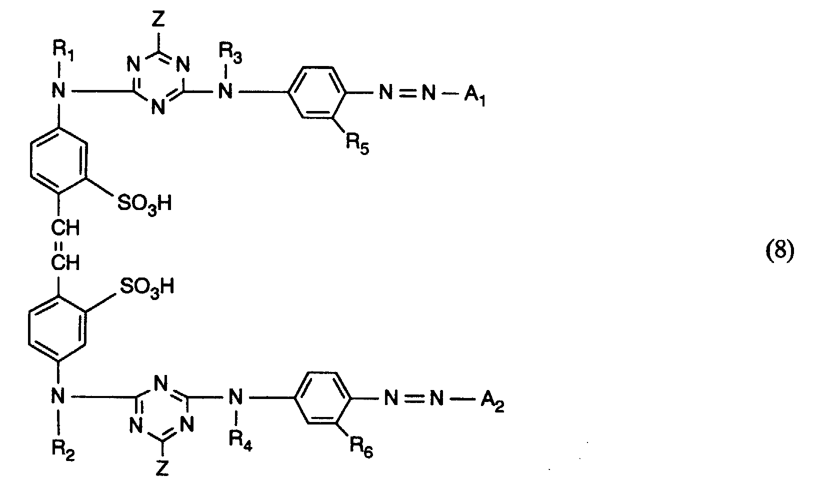 mit der Verbindung der Formel

   Y₁-H (9) oder Y₂-H (10)
umsetzt, wobei R₁, R₂, R₃, R₄, R₅, R₆, Y₁, Y₂, A₁ und A₂ jeweils die unter Formel (1) angegebene Bedeutung haben und Z Halogen, vorzugsweise Chlor, ist.

Vorzugsweise setzt man die Trihalogenotriazinverbindung der Formel (2) zunächst mit in etwa stöchiometrischen Mengen einer Aminoazoverbindung der Formel (3) bzw. der Formel (5) bei einer Temperatur von z.B. -5 bis 20°C, vorzugsweise 0 bis 5°C, um, wobei der pH-Wert durch Zugabe geeigneter Basen, z.B. Alkalimetallbasen wie Lithium-, Natrium- oder Kaliumhydroxid oder -carbonat oder -hydrogencarbonat, neutral bis sauer, vorzugsweise bei 2 bis 7, insbesondere 3 bis 5, gehalten wird. Die Aminoazoverbindung der Formel (3) bzw. der Formel (5) wird zweckmässigerweise in etwa stöchiometrischen Mengen verwendet.

Die Reaktion der Verbindung der Formel (7) nacheinander mit den gemäss a) erhaltenen Verbindungen der Formeln (4) und (6) wird vorzugsweise bei einer Temperatur von z.B. 10 bis 50°C, insbesondere 20 bis 40°C, und einem neutralen bis sauren pH-Wert, der z.B. 3 bis 7, insbesondere 4 bis 6, beträgt, durchgeführt, wobei man zweckmässig in etwa stöchiometrische Mengen der Verbindungen (4), (6) und (7) einsetzt. Handelt es sich bei den Verbindungen der Formeln (3) und (5) um identische Aminoazoverbindungen, so stellt man vorteilhaft zunächst 2 Mol-Aequivalente der Verbindung der Formel (4) her und setzt diese mit ca. 1 Mol-Aequivalent Verbindung der Formel (7) um.

Die gemäss den oben beschriebenen Verfahren erhältlichen Triazinylfarbstoffe der Formel (8) enthalten noch Halogenatome Z, welche durch Reaktion mit der Verbindung der Formel (9) oder (10) bei erhöhter Temperatur, vorzugsweise 70 bis 100°C, und einem neutralen bis leicht alkalischen pH-Wert, der z.B. 7 bis 12, insbesondere 8 bis 12, beträgt, in eine Gruppe Y₁ bzw. Y₂ umgewandelt werden können.

Für die Reste R₁, R₂, R₃, R₄, R₅, R₆, Y₁, Y₂, A₁ und A₂ der in dem obigen Verfahren eingesetzten Verbindungen gelten die oben angegebenen Bedeutungen und Bevorzugungen.

Die Verbindungen der Formeln (2), (3), (5), (7), (9) und (10) sind bekannt oder können in Analogie zu bekannten Verbindungen erhalten werden.

Die Verbindungen der Formeln (3) und (5) können in bekannter Weise durch Diazotierung und Kupplung entsprechender Ausgangsverbindungen erhalten werden, wobei die Diazotierung in an sich bekannter Weise, z.B. mit einem Nitrit, z.B. mit einem Alkalimetallnitrit wie Natriumnitrit, in einem mineralsauren Medium, z.B. in einem salzsauren Medium, bei Temperaturen von beispielsweise -5 bis 40°C und vorzugsweise bei -5 bis 10°C erfolgt. Die Kupplung erfolgt in an sich bekannter Weise, bei sauren, neutralen bis schwach alkalischen pH-Werten und Temperaturen von beispielsweise 0 bis 30°C.

Die Azofarbstoffe der Formel (1) liegen entweder in der Form ihrer freien Säure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Ein weiterer Gegenstand der vorliegenden Erfindung ist die Verwendung der Azofarbstoffe der Formel (1) zum Färben oder Bedrucken von stickstoffhaltigen und insbesondere hydroxylgruppenhaltigen Fasermaterialien.

Die erfindungsgemässen Azofarbstoffe der Formel (1) eignen sich also zum Färben und Bedrucken von stickstoffhaltigen oder insbesondere von cellulosischen Fasermaterialien, vorzugsweise von textilen Fasermaterialien, aus Seide, Wolle oder synthetischen Polyamiden, sowie bevorzugt aus den cellulosischen Fasern, wie Rayon, Baumwolle oder Hanf.

Bezüglich ihrer färberischen Eigenschaften können sie als direktziehende oder Direktfarbstoffe (C.I. direct dyes) bezeichnet werden.

Ebenfalls können textile Fasermaterialien aus Mischfasern, wie z.B. aus Wolle/Baumwoll-, Polyamid/Baumwoll-, Polyacryl/Baumwoll- oder insbesondere Polyester/Baumwoll-Mischfasern durch Einbad-Färbeverfahren und in Gegenwart von Farbstoffen für die jeweils anderen Fasertypen gefärbt werden.

Die textilen Fasermaterialien können in den verschiedensten Verarbeitungszuständen vorliegen, wie z.B. als Faser, Garn, Gewebe oder Gewirke.

Neben den textilen Substraten können auch Leder und Papier mit erfindungsgemässen Azofarbstoffen der Formel (1) gefärbt werden.

Man erhält egale Färbungen in gelben Farbtönen mit guten Allgemeinechtheiten, insbesondere guten Reib-, Nass-, Nassreib-, Schweiss- und Lichtechtheiten. Sofern nötig, kann man die Nassechtheiten, insbesondere die Waschechtheit, der erhaltenen Direktfärbungen und -drucke durch eine Nachbehandlung mit sog. Fixiermitteln noch wesentlich verbessern.

Die erfindungsgemässen Farbstoffe der Formel (1) sind gut mit anderen Farbstoffen, insbesondere Dispersionsfarbstoffen kombinierbar. Die erfindungsgemässen Farbstoffe weisen eine ausreichende Hochtemperatur-Stabilität auf und lassen sich so unter den Färbebedingungen für Polyesterfasern, d.h. bei Temperaturen im Bereich von etwa 100 bis 150°C, vorzugsweise von 110 bis 130°C, aus wässriger Flotte und bei einem pH-Wert von 4 bis 7,5, vorzugsweise 5 bis 7, färben.

Damit ist es möglich, übliche Dispersionsfarbstoffe zusammen mit den erfindungsgemässen Farbstoffen der Formel (1) in einem einstufigen, einbadigen Verfahren zum Färben von Polyester/Baumwoll-Mischfasern (Mischgewebe) einzusetzen, wobei beide Faserarten gleichmässig und echt durch den jeweiligen Farbstoff angefärbt werden. Verwendet man einen Dispersionsfarbstoff mit gleicher Nuance wie der erfindungsgemässe Farbstoff sie aufweist, so ist es auch möglich Ton-in-Ton-Färbungen zu erhalten.

Mit der Bereitstellung der erfindungsgemässen Farbstoffe der Formel (1) kann man das Färben von textilen Mischfasern (Mischgeweben), z.B. solchen aus Polyester- und Cellulosefasern, wesentlich vereinfachen. Die an sich übliche Färbung jeder Faserart einer Fasermischung in einem separaten Arbeitsgang unter Anwendung unterschiedlicher Färbebedingungen ist damit nicht mehr nötig.

Die folgenden Beispiele dienen zur Erläuterung der Erfindung. Teile und Prozente beziehen sich auf das Gewicht, sofern nicht anders angegeben. Gewichtsteile und Volumenteile stehen in gleicher Beziehung zueinander wie Kilogramm und Liter. Die Temperaturen sind in Celsiusgraden angegeben.

Beispiel 1: 173 Teile 3-Aminobenzolsulfonsäure werden in 500 Teilen Wasser/Eis-Gemisch und 128 Teilen konzentrierter Salzsäure verrührt. Anschliessend wird innerhalb von 30 Minuten bei einer Temperatur von ca. 0°C eine Lösung von 70,5 Teilen Natriumnitrit in 200 Teilen Wasser zugetropft. Nach der Diazotierung wird der Nitritüberschuss mit Sulfaminsäure zerstört.

Zur Kupplung werden 186,6 Teile 3-Aminoacetanilid als Hydrochlorid in 400 Teilen Wasser gelöst und mit ca. 145 Teilen einer wässrigen Natriumhydroxidlösung (30%) versetzt. Zu dieser Lösung wird die wie oben angegeben erhältliche Suspension der Diazoverbindung getropft und der pH wird durch Zugabe einer wässrigen Natriumhydroxidlösung bei einem Wert von 4,8 gehalten. Nachdem die Kupplung beendet ist, wird mit 290 Teilen Natriumchlorid ausgesalzen und abfiltriert. Nach Trocknen erhält man 370 Teile eines Rohprodukts, welches in Form der freien Säure der Verbindung der Formel 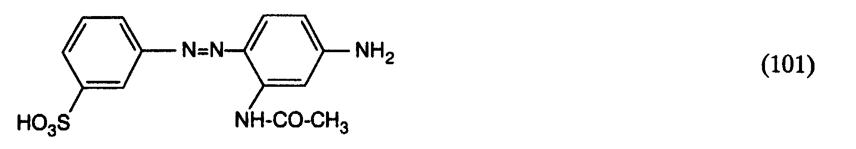 entspricht.

Erläuterungsbeispiel: 19,4 Teile Cyanurchlorid werden mit 100 Teilen Eiswasser und 100 Teilen Eis verrührt. Die erhaltene Cyanurchloridsuspension wird vorgelegt und es wird bei einer Temperatur von 0 bis 2°C und einem pH-Wert von 3,5 bis 4 eine Lösung von 33,4 Teilen der Verbindung der Formel (101) gemäss Beispiel 1 in 750 Teilen Wasser innerhalb von 60 Minuten zugetropft. Der pH wird durch Zugabe einer 1-normalen wässrigen Natriumhydroxidlösung bei einem Wert von 3,5 bis 4 gehalten. Nach Beendigung des Eintropfens lässt man die erhaltene Mischung ca. 2,5 Stunden ausreagieren. Der Verbrauch an 1-normaler wässriger Natriumhydroxidlösung beträgt ca. 110 Teile. Es wird eine Reaktionslösung erhalten, welche die in Form der freien Säure angegebene Verbindung der Formel 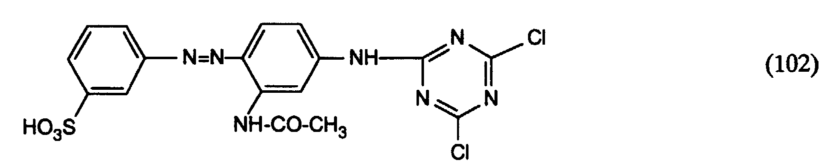 enthält.

In einer zweiten Stufe werden 26,3 Teile 4,4'-Diamionstilben-2,2'-disulfonsäure in 50 Teilen Wasser gelöst und innerhalb von 10 Minuten zur wie oben angegeben erhaltenen Lösung der Verbindung der Formel (102) zugetropft, wobei der pH durch Zugabe einer 1-normalen wässrigen Natriumhydroxidlösung bei einem Wert von 4,8 gehalten wird. Nach Beendigung des Eintropfens lässt man die erhaltene Mischung über Nacht ausreagieren. Der Verbrauch an 1-normaler wässriger Natriumhydroxidlösung beträgt ca. 100 Teile. Anschliessend wird mit 150 Teilen Natriumchlorid ausgesalzen und das ausgefallene Produkt abgenutscht. Nach Trocknen im Vakuumschrank erhält man 97 Teile der in Form der freien Säure angegebenen Verbindung der Formel 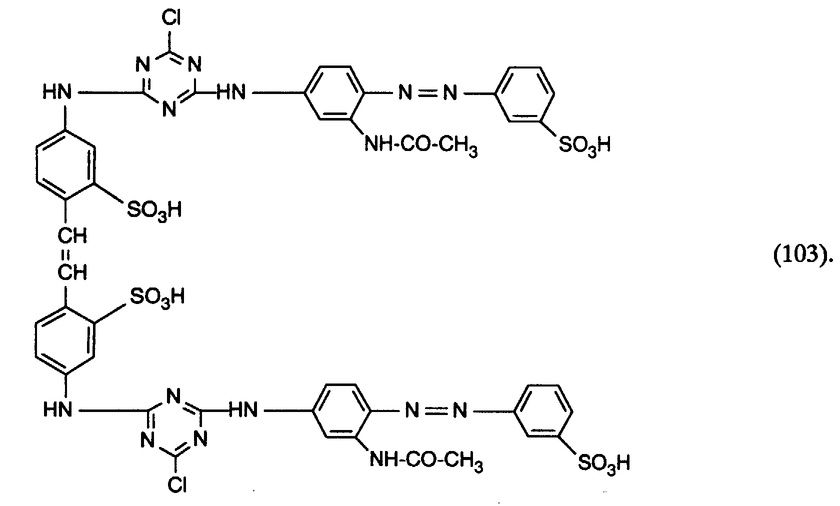 In einer dritten Stufe werden 18,92 Teile der wie oben angegeben erhältlichen Verbindung der Formel (103) in 500 Teilen Wasser gelöst, mit 2,75 Teilen 2-Aminoäthanol versetzt und auf eine Temperatur von 85°C erhitzt. Der pH fällt von anfänglich 11,2 auf einen Wert von 8,5. Die Reaktionsdauer beträgt ca. 20 Stunden. Zur Abscheidung des Reaktionsproduktes wird mit Natriumchlorid ausgesalzen und das ausgefallene Produkt abfiltriert. Nach Trocknen erhält man 18 Teile eines Farbstoffes, der in Form der freien Säure der Verbindung der Formel 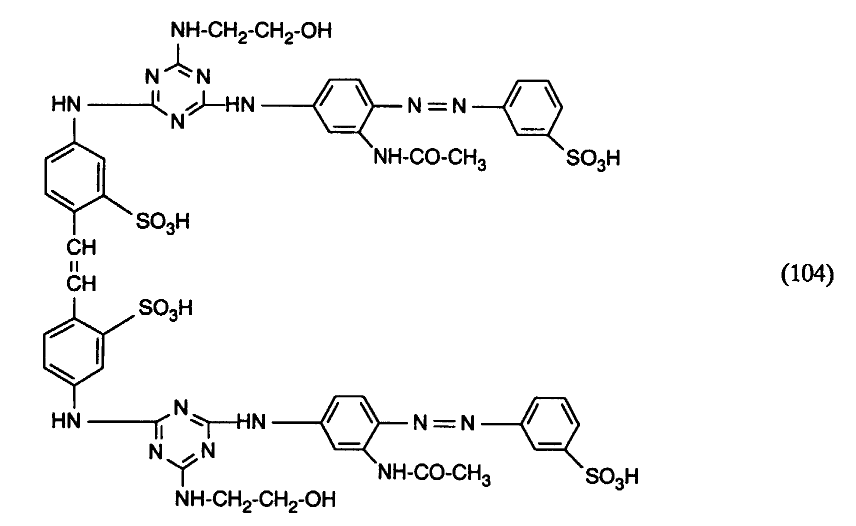 entspricht und Baumwolle in gelben Farbtönen färbt.

Beispiele 2 bis 4: Verfährt man wie im Erläuterungsbeispiel angegeben, verwendet jedoch anstelle von 33,4 Teilen der Verbindung der Formel (101) eine äquimolare Menge einer Verbindung der Formel 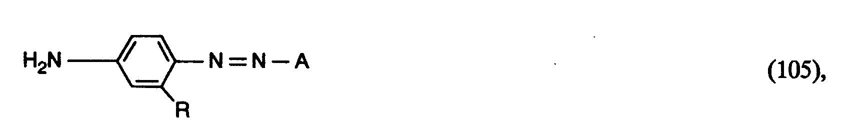 und anstelle von 2,75 Teilen 2-Aminoäthanol eine äquimolare Menge einer Verbindung der Formel

H-Y (106),

wobei A, R und Y die in der folgenden Tabelle 1 angegebenen Bedeutungen haben, so werden die in Tabelle 1 angegebenen Farbstoffe der allgemeinen Formel 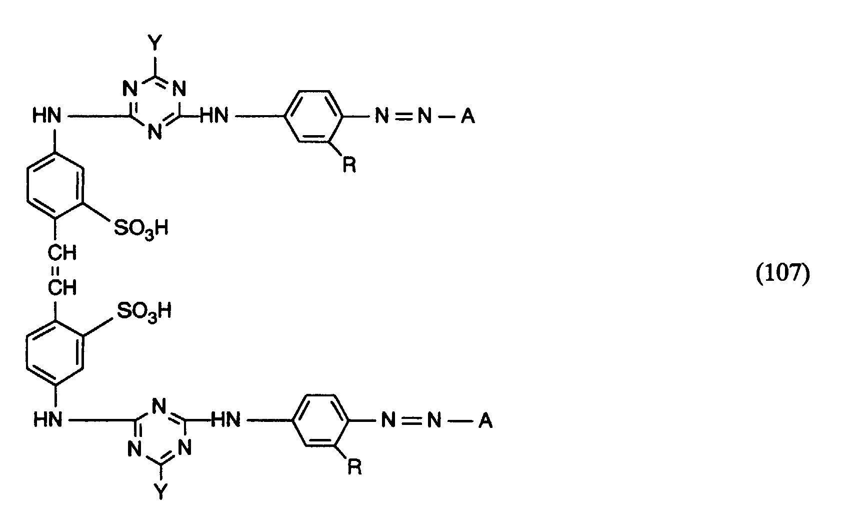 erhalten, worin A, Y und R die in Tabelle 1 angegebenen Bedeutungen haben, und welche Baumwolle in gelben Farbtönen färben.

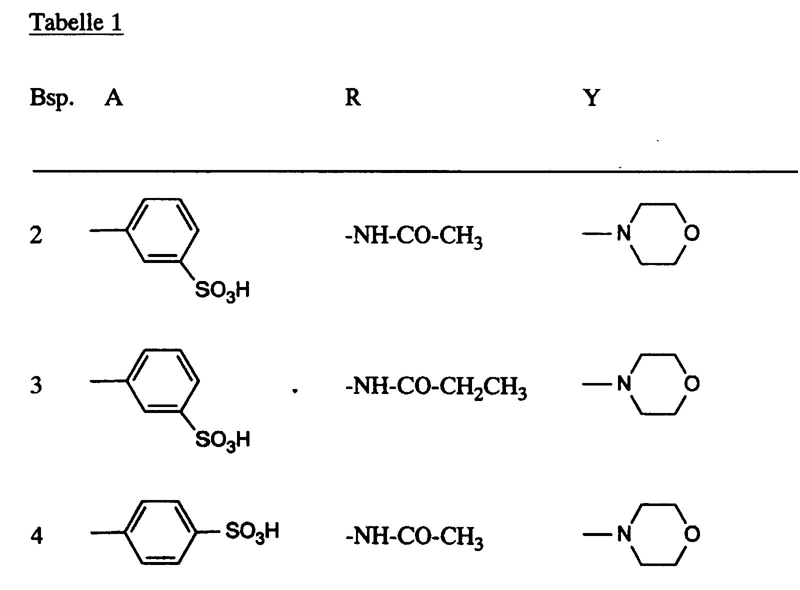

## Patentansprüche

1. Azofarbstoffe der Formel 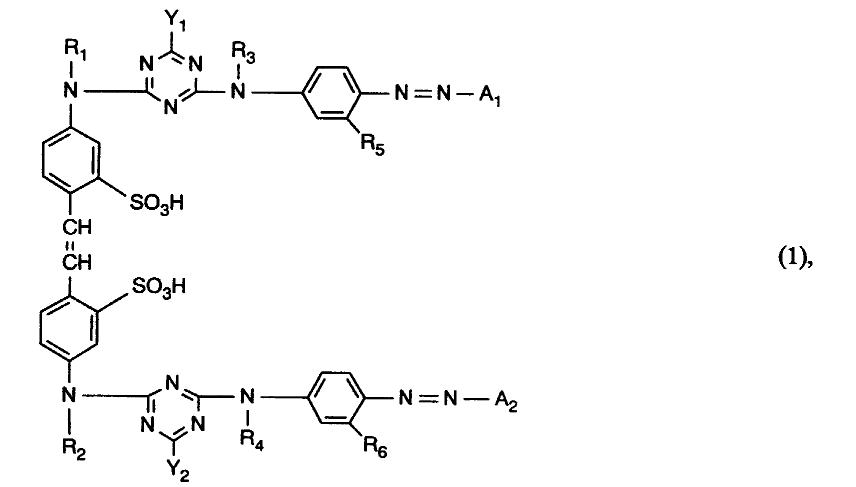 worin
R₁, R₂, R₃ und R₄ unabhängig voneinander Wasserstoff oder gegebenenfalls substituiertes C₁-C₄-Alkyl sind,
R₅ und R₆ C₂-C₄-Alkanoylamino,
Y₁ und Y₂ Morpholino und
A₁ und A₂ durch Sulfo substituiertes Phenyl bedeuten.

2. Azofarbstoffe gemäss Anspruch 1, worin R₁, R₂, R₃ und R₄ Wasserstoff oder C₁-C₄-Alkyl, insbesondere Wasserstoff, bedeuten.

3. Azofarbstoffe gemäss einem der Ansprüche 1 und 2, worin A₁ und A₂ jeweils identische Bedeutungen haben.

4. Verfahren zur Herstellung von Azofarbstoffen der Formel (1) gemäss Anspruch 1, dadurch gekennzeichnet, dass man
a) unabhängig voneinander eine Verbindung der Formel 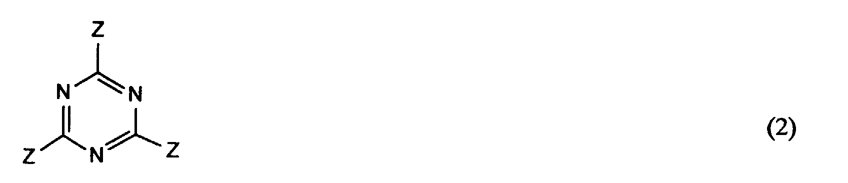 mit einer Verbindung der Formel 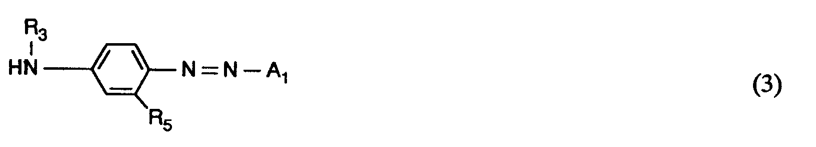 zur Verbindung der Formel 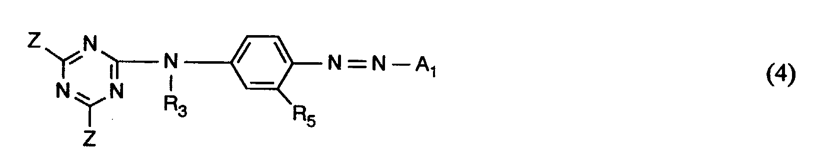 und eine weitere Verbindung der Formel (2) mit einer Verbindung der Formel 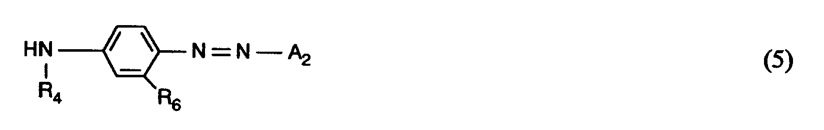 zur Verbindung der Formel 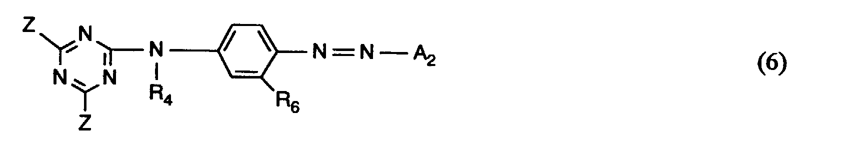 umsetzt,
b) eine Verbindung der Formel 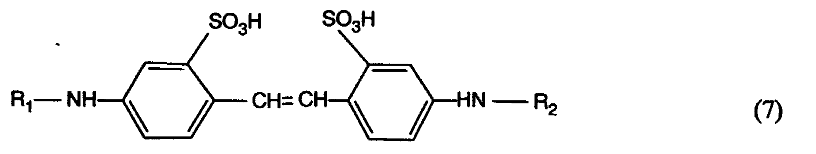 nacheinander in beliebiger Reihenfolge mit den gemäss a) erhältlichen Verbindungen der Formel (4) und (6) umsetzt und
c) die gemäss b) erhältliche Verbindung der Formel 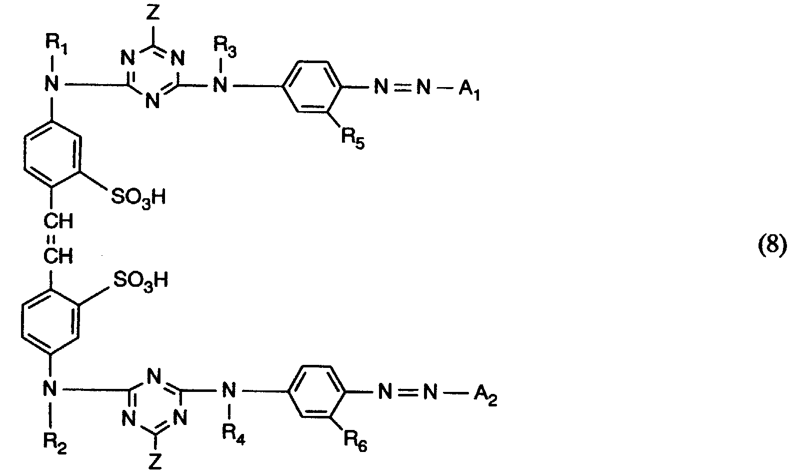 mit der Verbindung der Formel
Y₁-H (9) oder Y₂-H (10)
umsetzt, wobei R₁, R₂, R₃, R₄, R₅, R₆, Y₁, Y₂, A₁ und A₂ jeweils die im Anspruch 1 angegebene Bedeutung haben und Z Halogen, vorzugsweise Chlor, ist.

5. Verwendung der Azofarbstoffe nach einem der Ansprüche 1 bis 3 bzw. der gemäss Anspruch 4 erhaltenen Azofarbstoffe zum Färben oder Bedrucken von stickstoffhaltigen oder hydroxygruppenhaltigen Fasermaterialien.

6. Verwendung nach Anspruch 5, dadurch gekennzeichnet, dass man Fasergemische aus Synthesefasern und cellulosischen Fasermaterialien, insbesondere Polyester/Baumwoll-Mischgewebe, in Gegenwart eines Dispersionsfarbstoffes für die Polyesterfasern unter den Färbebedingungen für Polyesterfasern färbt.

7. Verfahren zum Färben von Polyester/Baumwoll-Mischgeweben mit Dispersions- und Direktfarbstoffen, dadurch gekennzeichnet, dass man in einem einstufigen, einbadigen Verfahren neben den Dispersionsfarbstoffen Farbstoffe der Formel (1) gemäss Anspruch 1 verwendet und aus wässriger Flotte bei Temperaturen im Bereich von 100 bis 150°C, vorzugsweise 120 bis 130°C, und einem pH-Wert zwischen 4 und 7,5 färbt.

## Claims

1. An azo dye of formula 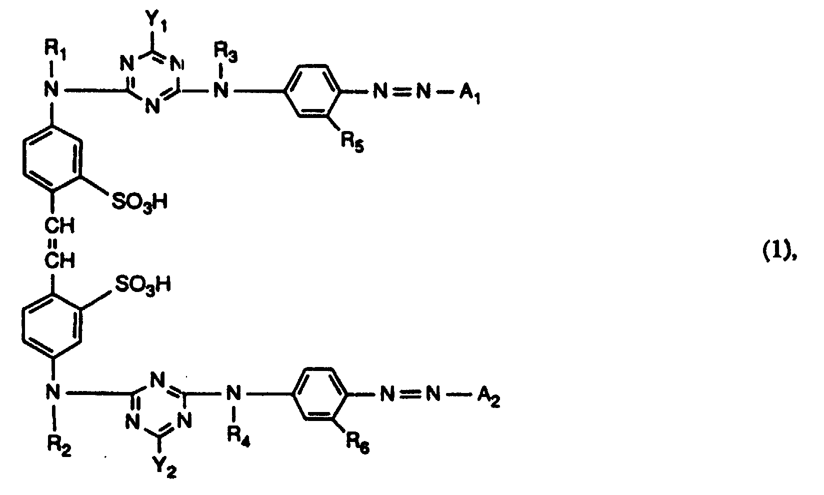 in which R₁, R₂, R₃ and R₄ are each independently of one another hydrogen or unsubstituted or substituted C₁-C₄alkyl,
R₅ and R₆ are C₂-C₄alkanoylamino,
Y₁ and Y₂ are morpholino, and
A₁ and A₂ are sulfo-substituted phenyl.

2. An azo dye according to claim 1, wherein R₁, R₂, R₃ and R₄ are hydrogen or C₁-C₄alkyl, especially hydrogen.

3. An azo dye according to one of claims 1 and 2, wherein A₁ and A₂ each have identical meanings.

4. A process for the preparation of an azo dye of formula (1) according to claim 1, which comprises a) reacting, independently of each other, a compound of formula 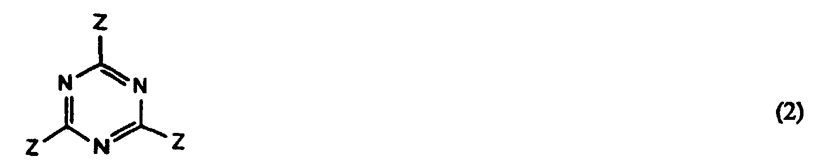 with a compound of formula 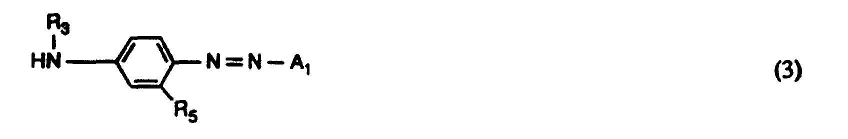 to give the compound of formula 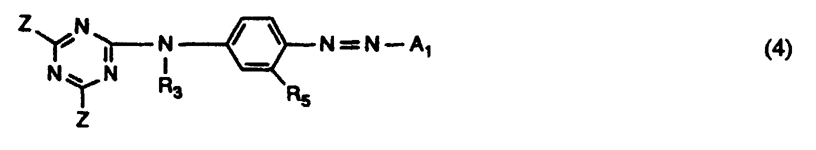 and reacting a further compound of formula (2) with a compound of formula 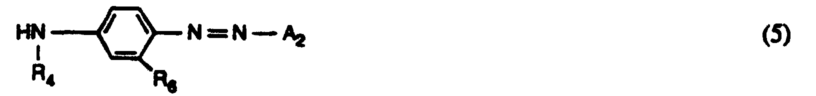 to give the compound of formula 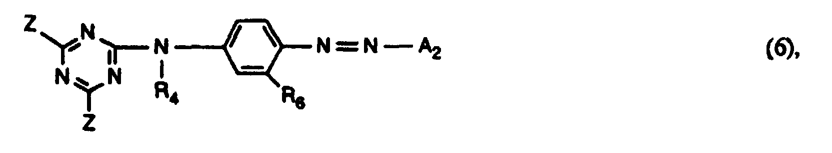 b) reacting a compound of formula 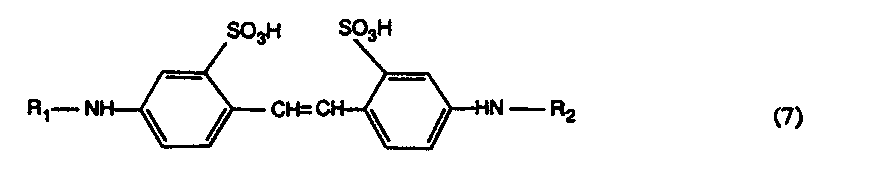 in succession, and in any order, with the compounds of formulae (4) and (6) obtainable in accordance with a), and
c) reacting the compound of formula 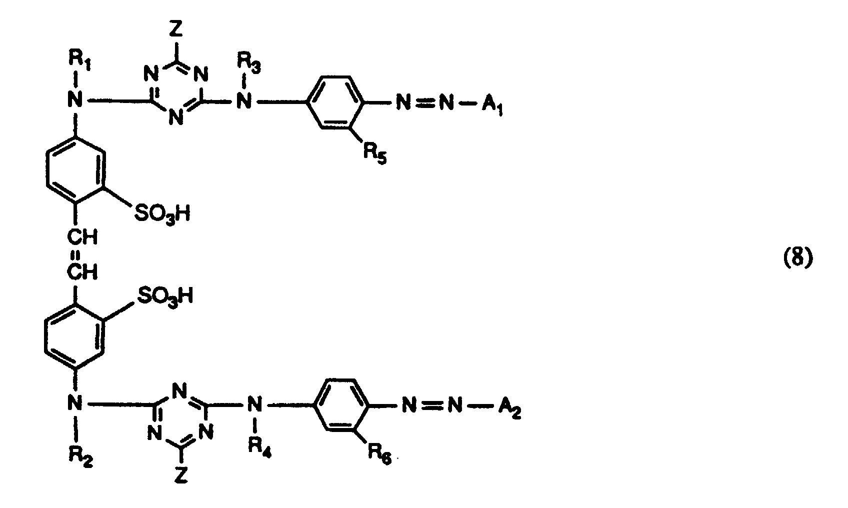 obtainable in accordance with b) with the compound of formula
Y₁-H (9) or Y₂-H (10),
where R₁, R₂, R₃, R₄, R₅, R₆, Y₁, Y₂, A₁ and A₂ are each as defined in claim 1 and Z is halogen, preferably chloro.

5. Use of an azo dye according to one of claims 1 to 3 or of an azo dye obtained according to claim 4 for dyeing or printing nitrogen- or hydroxyl-containing fibre materials.

6. Use according to claim 5, which comprises dyeing blends of synthetic fibres and cellulosic fibre materials, in particular polyester/cotton blends, in the presence of a disperse dye for the polyester fibres under the conditions for dyeing polyester fibres.

7. A process for dyeing polyester/cotton blends with disperse dyes and direct dyes, which comprises using, in addition to the disperse dyes, a dye of formula (1) according to claim 1, in a single-step, one-bath process, and dyeing from an aqueous liquor at temperatures in the range from 100 to 150°C, preferably from 120 to 130°C, and at a pH between 4 and 7.5.

## Revendications

1. Colorants azoïques de formule 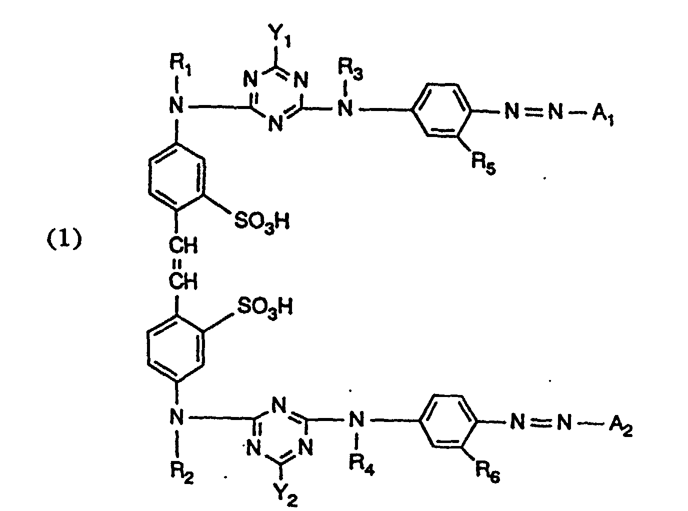 dans laquelle
R₁, R₂, R₃ et R₄ représentent, indépendemment les uns des autres, un atome d'hydrogène ou un groupe alkyle en C₁₋₄ éventuellement substitué,
R₅ et R₆ représentent un groupe alcanoylamino en C₂₋₄,
Y₁ et Y₂ représentent un groupe morpholino et
A₁ et A₂ représentent un noyau phényle sulfoné.

2. Colorants azoïques selon la revendication 1, dans lesquels R₁, R₂, R₃ et R₄ représentent un atome d'hydrogène ou un groupe alkyle en C₁₋₄, en particulier un atome d'hydrogène.

3. Colorants azoïques selon une des revendications 1 et 2 dans lesquels A₁ et A₂ ont une signification indique.

4. Procédé pour la préparation de colorants azoïques de formule (1) selon la revendication 1, caractérisé en ce que l'on fait réagir indépendamment
(a) un composé de formule 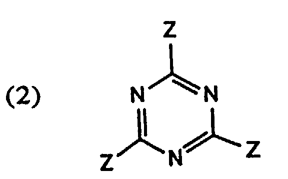 avec un composé de formule 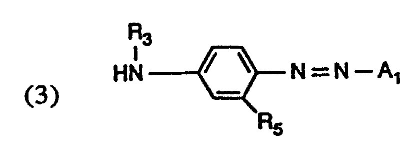 pour obtenir un composé de formule 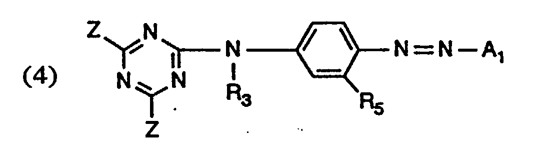 et un autre composé de formule (2) avec un composé de formule 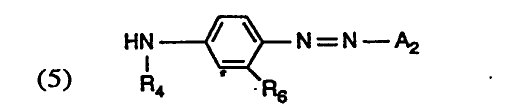 pour obtenir un composé de formule 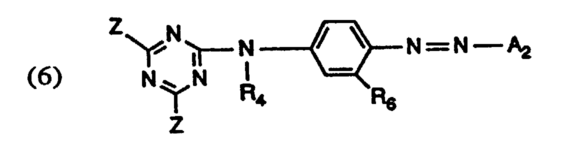
(b) un composé de formule 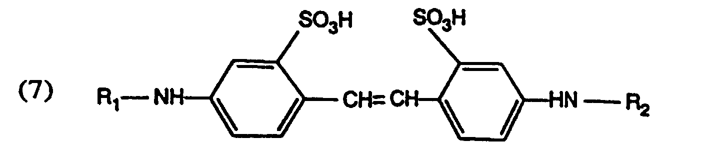 successivement, dans n'importe quel ordre, avec les composés de formule (4) et (6) que l'on peut obtenir selon (a);
(c) le composé de formule 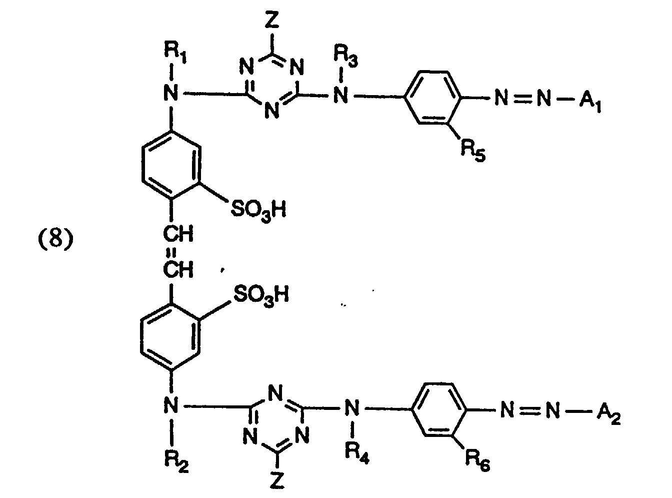 obtenu selon b) avec un composé de formule
(9) Y₁-H
ou
(10) Y₂-H
R₁, R₂, R₃, R₄, R₅, R₆, Y₁, Y₂, A₁ et A₂ ayant les significations indiquées dans la revendication 1 et Z représente un atome d'halogène, de préférence un atome de chlore.

5. Utilisation des colorants azoïques selon une des revendications 1 à 3 ou obtenus selon la revendication 4 pour la teinture ou l'impression de matériaux fibreux contenant des atomes d'azote ou des groupes hydroxyle.

6. Utilisation selon la revendication 5, caractérisée en ce que l'on teint des mélange de fibres contenant des fibres synthétiques et des matériaux fibreux cellulosiques, en particulier des tissus mixtes en polyester/coton, en présence d'un colorant de dispersion pour les fibres de polyester dans les conditions de teinture pour fibres de polyester.

7. Procédé de teinture de tissus mixtes polyester/coton avec des colorants de dispersion et des colorants directs, caractérisé en ce que l'on utilise dans un procédé à étape unique et à bain unique en plus des colorants de dispersion, des colorants de formule (1) selon la revendication 1, et en ce que l'on teint dans un bain aqueux à des températures comprises entre 100 et 150 °C, de préférence entre 120 °C et 130 °C et à un pH compris entre 4 et 7,5.
